# EUROPÄISCHE PATENTSCHRIFT

(11) **EP 1 836 236 B1**
(45) Veröffentlichungstag und Bekanntmachung des Hinweises auf die Patenterteilung: **18.06.2008**
(21) Anmeldenummer: 05817403.8
(22) Anmeldetag: 18.11.2005
(51) Int. Cl.: C08G 65/48, C08G 65/30

(54) **VERFAHREN ZUR HERSTELLUNG VON POLYARYLENETHERKETONEN**
METHOD FOR PRODUCING POLYARYLENE ETHER KETONES
PROCEDE POUR PRODUIRE DES POLYARYLENE ETHER CETONES

(30) Priorität: 14.01.2005 DE 102005002084
(43) Veröffentlichungstag der Anmeldung: 26.09.2007
(73) Patentinhaber: Evonik Degussa GmbH, 40474 Düsseldorf (DE)
(72) Erfinder: RICHTER, Alexander, 45657 Recklinghausen (DE); GÜNZEL, Bernd, 45721 Haltern am See (DE); BIERHAUS, Christian, 44267 Dortmund (DE); KREIDLER, Patrick, 45663 Recklinghausen (DE); NORDHOFF, Stefan, 45657 Recklinghausen (DE); KRENZ, Michael, 45770 Marl (DE)
(86) Internationale Anmeldenummer: PCT/EP2005/056060
(87) Internationale Veröffentlichungsnummer: WO 2006/074835

(56) Entgegenhaltungen:
- EP-A- 0 143 407
- EP-A- 0 182 618
- EP-A- 0 412 498
- WO-A-02/096974

## Beschreibung

Gegenstand der Erfindung ist ein Verfahren zur Herstellung von Polyarylenetherketonen, insbesondere ein Verfahren zur Aufarbeitung des aus Halogenaromaten, Phenolen, Carbonaten und Lösemittel erhaltenen Reaktionsgemisches und Isolierung von reinem Polyarylenetherketon (PAEK), beispielsweise Polyetheretherketon (PEEK).

Die Herstellung von PAEK durch nucleophile Polykondensation von Bisphenolen und organischen Dihalogenverbindungen in einem geeigneten Lösemittel unter Verwendung von Alkali- oder Erdalkalicarbonaten ist ein bekannter Prozess, der in einer Vielzahl von Patentanmeldungen beschrieben ist, beispielsweise in EP-A-0 001 879, EP-A-0 182 648 und EP-A-0 244 167. Bei Durchführung dieses Verfahrens schließt sich nach dem Ende der Polykondensation immer eine sehr aufwendige Wäsche des Reaktoraustrags an. Die Wäsche hat zum Ziel, das Reaktionslösemittel, anorganische Salze, Restmonomere und andere Verbindungen aus dem PAEK zu entfernen. Im Laufe der Entwicklungsarbeiten an PAEK hat sich gezeigt, dass es für das Verfahren und die Produkteigenschaften vorteilhaft ist, wenn man als organische Dihalogenide Difluorverbindungen verwendet. Nachteilig bei der Verwendung der Difluorverbindungen ist jedoch die Bildung schwerlöslicher Alkali- oder Erdalkalifluoride als Nebenprodukte während der Reaktion. Darüber hinaus muss für die Lösungspolykondensation ein geeignetes Lösemittel in verhältnismäßig großen Mengen, bezogen auf den Gesamtreaktionsansatz, verwendet werden, um das entstehende Polymer auch bei höheren Molmassen in Lösung zu halten. In der Literatur wird für diesen Einsatz in den allermeisten Fällen Diphenylsulfon empfohlen.

Erhöhte Mengen an Nebenprodukten oder Lösemittel im Polymer führen bei den Endprodukten, d. h. den üblicherweise durch Spritzguss oder Extrusion hergestellten Formteilen, zu diversen technischen Nachteilen. Sie bilden Schlieren auf der Oberfläche, führen zur Geruchsbelästigung, zur Blasenbildung und zu verminderten mechanischen Eigenschaften des Werkstoffs. Darüber hinaus sind einige Nebenprodukte potentiell toxisch und können zu gesundheitlichen Beeinträchtigungen führen. Aus diesen Gründen werden die flüchtigen Bestandteile aus Polymeren üblicherweise bis auf Restgehalte von weniger als 0,1 % - in einigen Fällen auch bis auf Restgehalte im ppm-Bereich - entfernt.

Naturgemäß bereiten die oben erwähnten Nebenprodukte bzw. das Lösemittel Diphenylsulfon bei der Aufarbeitung des Reaktionsprodukts Schwierigkeiten. Alle vom Polymer verschiedenen Substanzen müssen durch aufwendiges Waschen in verschiedenen Lösemitteln vom PAEK abgetrennt werden (EP-A-0 244 167, EP-A-0 182 648, EP-A-0 297 363, EP-A-0 322 151). Diese Wäschen entsprechen zusätzlich einer fest-flüssig-Extraktion, da sich die Nebenprodukte und das Lösemittel nicht nur um das, sondern auch im festen Polymer befinden; sie benötigen je nach Temperatur, Körnung des Reaktoraustrags, Art des Lösemittels usw. sehr viel Zeit und große Mengen an Waschlösemittel. Die Wäsche der Polymeren mit geeigneten Lösemitteln kann auch unter erhöhter Temperatur und erhöhtem Druck erfolgen (WO 02/096974); unter Umständen kann hierbei aber das Produkt bei zu langen Standzeiten und hohen Temperaturen unnötig geschädigt werden. Weiterhin ist an diesen Verfahren nachteilig, dass sehr große Abwasser- bzw. Lösemittelmengen erzeugt werden, die mit kleinen Mengen an Metallhalogeniden, Restmonomeren bzw. Reaktionslösemittel beladen sind und demzufolge nur unter großem Aufwand entsorgt bzw. aufgearbeitet werden können. Bei einer wirtschaftlichen Anzahl von Waschschritten ist demgegenüber die erzielbare Aufreinigung begrenzt.

Neben dem Verfahren der Polymerwäsche sind weitere Verfahren zur Abtrennung von anorganischen Salzen oder Reaktionslösemittel bekannt. Beispielhaft genannt sei die Abtrennung der anorganischen Salze durch Filtration vor der Erstarrung des Reaktionsgemisches (US 5 357 040, US 5 288 834, EP-A-0 297 363), was aber aufgrund der erforderlichen geringen Viskositäten große Mengen an Reaktionslösemittel erforderlich macht, das anschließend aufwendig entfernt werden muss. Die Abtrennung des Reaktionslösemittels durch Sprühtrocknung (DE-A-43 01 543) bzw. durch Entgasung im Extruder ist ebenfalls bekannt; beide Verfahren kommen jedoch für eine vollständige Abtrennung des Reaktionslösemittels nicht infrage, da die technische Realisierung für das Sprühtrocknen insbesondere bei Vorhandensein von zum Teil ausgefällten Salzen sehr aufwendig ist bzw. die benötigten Verweilzeiten für eine Entgasung im Extruder bei normalen Verarbeitungstemperaturen von 350 bis 420 °C so groß sind, dass es unweigerlich zu einer thermischen Schädigung des PAEK kommt.

Das gegenwärtig ausgeübte industrielle Herstellverfahren für PAEK umfasst beispielhaft folgende Schritte: Polykondensation in Lösung, Isolierung des Reaktionsprodukts aus dem Reaktor unter Abkühlung, gegebenenfalls Zerkleinerung des Reaktoraustrags in einer Mühle, wiederholtes Waschen mit Aceton/Ethanol/Wasser und Trocknung. Jedoch sorgen die genannten Verfahrensschritte - zusätzlich zu den weiter oben genannten Schwierigkeiten - für einen hohen logistischen Aufwand hinsichtlich der verschiedenen Lösemittel und der Bewegung des Materials zu Mühlen, von dort zu Waschbehältern, weiterhin zu Trocknern usw., was besondere Sorgfalt beim Feststoffhandling erfordert, beispielsweise zur Vermeidung von Produktverlusten (verringerte Ausbeute) und Kontamination. Darüber hinaus besteht bei diesen voneinander apparativ und räumlich getrennten Aufarbeitungsprozessschritten die Gefahr, dass aus trockenen Bestandteilen des Reaktoraustrags gefährliche Staub-Luft-Gemische entstehen, die eine unnötige Explosionsgefahr darstellen.

Die dieser Erfindung zugrunde liegende Aufgabe bestand also darin, die oben genannten Nachteile zu vermeiden und eine verbesserte Aufarbeitung des im PAEK-Herstellprozess erhaltenen Reaktionsgemisches aufzufinden.

Diese Aufgabe wurde durch ein Verfahren gelöst, das folgende Verfahrensschritte enthält:
a) Umsetzung einer aromatischen Dihalogenverbindung mit einem Bisphenol und/oder eines Halogenphenols in Gegenwart von Alkali- und/oder Erdalkalicarbonat oder -hydrogencarbonat in einem hochsiedenden aprotischen Lösemittel zu einem PAEK,
b) Nasszerkleinerung und gleichzeitige Vorextraktion des erstarrten Reaktionsgemisches,
c) Extrahieren und Filtrieren des nasszerkleinerten Produkts in einer Druckfilternutsche und
d) Trocknen des extrahierten Produkts.

Beispiele geeigneter aromatischer Dihalogenverbindungen sind 4,4'-Difluorbenzophenon, 4,4`-Dichlorbenzophenon, 4,4'-Dichlordiphenylsulfon, 4,4-Difluordiphenylsulfon, 1,4-Bis(4-fluorbenzoyl)benzol, 1,4-Bis(4-chlorbenzoyl)benzol, 4-Chlor-4'-fluorbenzophenon und 4,4'-Bis(4-fluorbenzoyl)biphenyl. Die Halogengruppe ist im Allgemeinen durch eine para-ständige Carbonyl- oder Sulfonylgruppe aktiviert. Im Falle einer para-ständigen Carbonylgruppe ist das Halogen Chlor oder bevorzugt Fluor; im Falle einer para-ständigen Sulfonylgruppe kann das Halogen Fluor oder Chlor sein, wobei wegen ausreichender Reaktivität und niedrigerer Kosten hier im Allgemeinen Chlor als Halogen bevorzugt wird. Es können auch Mischungen verschiedener Dihalogenverbindungen eingesetzt werden.

Beispiele geeigneter Bisphenole sind Hydrochinon, 4,4'-Dihydroxybenzophenon, 4,4'-Dihydroxydiphenylsulfon, 2,2'-Bis(4-hydroxyphenyl)propan, 4,4'-Dihydroxybiphenyl, Bis(4-hydroxyphenyl)ether, Bis(4-hydroxyphenyl)thioether, Bis(4-hydroxynaphthyl)ether, 1,4-, 1,5- oder 2,6-Dihydroxynaphthalin, 1,4-Bis(4-hydroxybenzoyl)-benzol, 4,4`-Bis(4-hydroxybenzoyl)biphenyl, 4,4`-Bis(4-hydroxybenzoyl)diphenylether oder 4,4-Bis(4-hydroxybenzoyldiphenylthioether. Selbstverständlich können auch Mischungen verschiedener Bisphenole eingesetzt werden.

Beispiele geeigneter Halogenphenole sind 4-(4'-Chlorbenzoyl)phenol und 4-(4'-Fluorbenzoyl)phenol. Hinsichtlich der Auswahl des Halogens gelten die gleichen Gesichtspunkte wie bei den Dihalogenverbindungen. Selbstverständlich können auch Mischungen verschiedener Halogenphenole oder Mischungen von Halogenphenolen mit einem 1 : 1-Gemisch von aromatischer Dihalogenverbindung und Bisphenol eingesetzt werden.

Geeignete Alkali- und Erdalkalicarbonate und -hydrogencarbonate leiten sich von Lithium, Natrium, Kalium, Rubidium, Caesium, Magnesium, Calcium, Strontium oder Barium her. Üblicherweise wird gemäß dem Stand der Technik ein Gemisch aus Natriumcarbonat und Kaliumcarbonat eingesetzt.

Das hochsiedende aprotische Lösemittel ist gemäß dem Stand der Technik vorzugsweise eine Verbindung der Formel 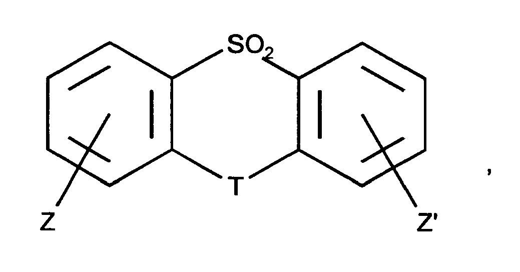 wobei T eine direkte Bindung, ein Sauerstoffatom oder zwei Wasserstoffatome darstellt; Z und Z' sind Wasserstoff oder Phenylgruppen. Bevorzugt handelt es sich hier um Diphenylsulfon.

Das PAEK enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei sollten mindestens 50 %, bevorzugt mindestens 70 % und besonders bevorzugt mindestens 80 % der Gruppen X eine Carbonylgruppe darstellen, während mindestens 50 %, bevorzugt mindestens 70 % und besonders bevorzugt mindestens 80 % der Gruppen Y aus Sauerstoff bestehen sollten.

In der insbesondere bevorzugten Ausführungsform bestehen 100 % der Gruppen X aus Carbonylgruppen und 100 % der Gruppen Y aus Sauerstoff. In dieser Ausführungsform kann das PAEK beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

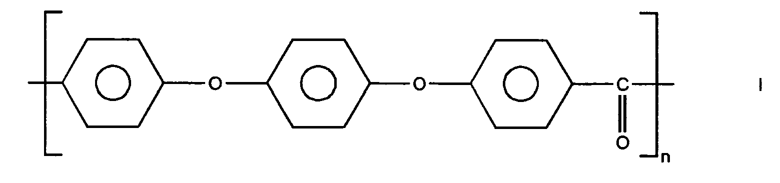

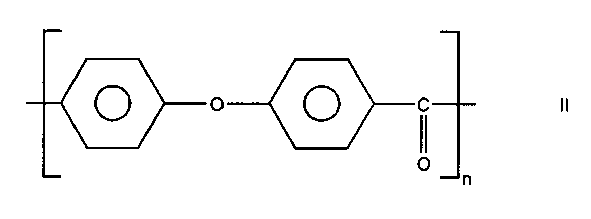

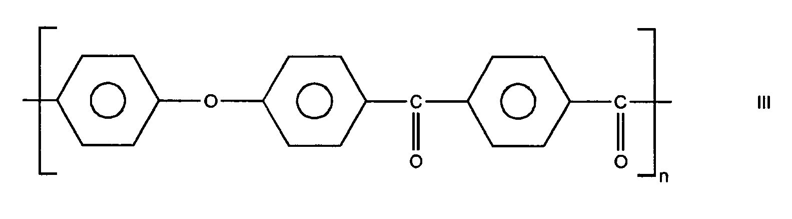

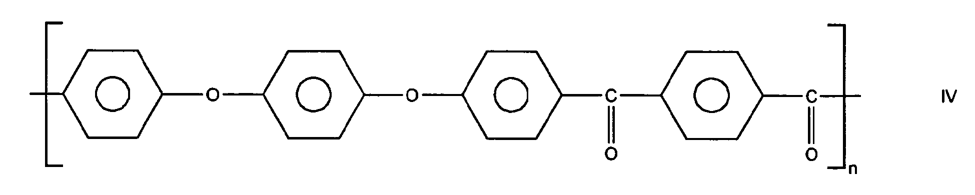

Das PAEK ist im Allgemeinen teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt. Jedoch ist die Lehre der Erfindung auch auf amorphe PAEK anwendbar. Im Allgemeinen gilt, dass Sulfonylgruppen, Biphenylengruppen, Naphthylengruppen oder sperrige Gruppen Y, wie z. B. eine lsopropylidengruppe, die Kristallinität verringern.

Aufgrund der vorgegebenen Reaktivität der funktionellen Gruppen sowie der Schwerlöslichkeit des PAEK bei niedrigeren Temperaturen wird die Reaktion üblicherweise im Temperaturbereich von ca. 200 bis 400 °C durchgeführt, wobei der Bereich von ca. 250 bis 350 °C bevorzugt ist. Weitere Einzelheiten zur Durchführung der Reaktion sind dem oben genannten Stand der Technik zu entnehmen.

Nach Durchführung der Reaktion wird die Reaktionsmischung aus dem Reaktor ausgefahren. Sie kann nun nach allen bekannten Methoden verfestigt werden. Dazu gehört beispielsweise das Abschrecken der Schmelze in einem kalten Lösemittel, wie z. B. Wasser, das Ausfällen durch Zugabe eines weiteren Lösemittels, das als Fällungsmittel fungiert, oder die Verfestigung auf einer gekühlten Fläche.

Bei der sich anschließenden Nasszerkleinerung wird die erstarrte Reaktionsmischung in einem Brecher, einer Mühle oder einer Dispergiereinrichtung in einem organischen Lösemittel wie beispielsweise einem Keton, einem Alkohol, einem Ether, einem Ester, einem Aromaten oder in Wasser aufgenommen und einer starken Scherung unterworfen. Aus Gründen der Zweckmäßigkeit liegt das Gewichtsverhältnis des Lösemittels zur erstarrten Reaktionsmischung im Bereich von etwa 1 : 10 bis etwa 20 : 1, bevorzugt im Bereich von etwa 1 : 1 bis etwa 10 : 1 und besonders bevorzugt im Bereich von etwa 2 : 1 bis etwa 4 : 1. Als Brecher bzw. Mühlen können alle diejenigen eingesetzt werden, die dem Fachmann bekannt sind; beispielsweise sei verwiesen auf Vauck/Müller, Grundoperationen chemischer Verfahrenstechnik, 10. Auflage, Kapitel 5.1. (Zerkleinern), Deutscher Verlag für Grundstoffindustrie, Leipzig 1994. So können beispielsweise Backen-, Rund-, Walzen- oder Prallbrecher für eine Zerkleinerung auf etwa 0,5 bis 50 mm Durchmesser bzw. Prall-, Wälz-, Kugel-, Schwing-, Schneid- oder Strahlmühlen bzw. Dispergiereinrichtungen für eine Zerkleinerung auf etwa 50 bis 500 µm eingesetzt werden.

In einer möglichen Ausführungsform wird die Nasszerkleinerung in einem Brecher in Anwesenheit von Lösemittel durchgeführt (Brecher-/Waschprozess).

In einer anderen möglichen Ausführungsform wird die Nasszerkleinerung in einer Mühle in Anwesenheit von Lösemittel durchgeführt (Mahl-/Waschprozess). Diese Vorgehensweise empfiehlt sich dann, wenn die erstarrte Reaktionsmischung bereits in vorzerkleinerter Form vorliegt oder direkt in partikulärer Form erhalten wird.

In einer weiteren möglichen Ausführungsform wird die erstarrte Reaktionsmischung zunächst in einem Brecher in Anwesenheit oder Abwesenheit von Lösemittel vorzerkleinert, wonach die eigentliche Nasszerkleinerung in einer Mühle durchgeführt wird (Brecher-/Mahl-/Waschprozess).

Bei der Nasszerkleinerung erzielt man nicht nur eine Zerkleinerung des Reaktionsgemisches, sondern auch eine Waschung und Vorextraktion. Ein Teil der als Nebenprodukt anfallenden Salze und/oder des Reaktionslösemittels wird bereits hier entfernt.

In einer bevorzugten Variante führt man den Mahl-/Waschprozess mit einer in einen Rührkessel (der ein geeignetes Lösemittel sowie den zu zerkleinernden Reaktoraustrag enthält) getauchten Dispergiereinrichtung mit hoher Scherkraft durch. Für letzteres kann beispielsweise eine Vorrichtung verwendet werden, die unter der Handelsbezeichnung DISPAX^{®} oder TURRAX^{®} von der Firma IKA-Werke GmbH & Co. KG in D-79219 Staufen vertrieben wird.

Geeignete organische Lösemittel für die Nasszerkleinerung und für die anschließende Extraktion in der Druckfilternutsche sind beispielsweise Aceton, Methylethylketon, Methylisobutylketon, Methanol, Ethanol, Isopropanol, n- oder i-Butanol, 2-Methoxyethanol, 1.2-Dimethoxyethan, Tetrahydrofuran, Ethylacetat, Benzol, Toluol, Xylol sowie Mischungen daraus. Prinzipiell kann aber auch jedes andere geeignete Lösemittel verwendet werden.

Nach der Nasszerkleinerung wird die entstandene Suspension in eine Druckfilternutsche gepumpt oder hydrostatisch abgelassen. Die Druckfilternutsche besteht aus einem Behälter sowie beweglichen oder unbeweglichen angeschlossenen und/oder eingebauten Bauteilen, gefertigt aus einem Werkstoff hinreichender Festigkeit, sodass Drücke von mindestens 1 bar, bevorzugt mindestens 6 bar und besonders bevorzugt mindestens 25 bar beherrscht werden können. Der Werkstoff muss eine ausreichende chemische Beständigkeit gegenüber den verwendeten Einsatzstoffen und Nebenprodukten, auch bei erhöhter Betriebstemperatur, aufweisen. Die Druckfilternutsche besteht vorzugsweise aus Metall wie z. B. Edelstahl (etwa Edelstahl 1.4571) oder Hastelloy und besitzt Zu- und Ableitungen für Flüssigkeiten, Suspensionen und Feststoffe. Am Boden der Nutsche ist ein Filterelement angebracht, durch welches das Lösemittel durch den sich aufbauenden Filterkuchen nach außen abfließen kann. Als Filtermittel kommen alle diejenigen infrage, die unter den Einsatzbedingungen (Temperatur und Medium) geeignet sind, wobei Metallfilterelemente bevorzugt sind. Weiterhin weist die Druckfilternutsche vorteilhaft eine Vorrichtung zum Resuspendieren des Feststoffs auf, bevorzugt einen Rührer oder einen Dispergator. Zum Ausräumen des Feststoffs ist vorteilhaft eine Vorrichtung unmittelbar oberhalb des Filtermittels installiert.

Bauarten von Druckfilternutschen sind beispielsweise in Vauck/Müller, Grundoperationen chemischer Verfahrenstechnik, 10. Auflage, Kapitel 4.1.3 (Filtrieren und Auspressen), Deutscher Verlag für Grundstoffindustrie, Leipzig 1994 beschrieben.

Die Suspension aus der Nasszerkleinerung wird je nach Korngröße bei einem Druck von beispielsweise 1 bis 10 bar filtriert. Darauffolgend kann mindestens einmal mit einem organischen Lösemittel wie beispielsweise einem Keton, einem Alkohol, einem Ether, einem Ester oder einem Aromaten und mindestens einmal mit Wasser der polymere Feststoff im Druckfilter resuspendiert werden, ohne ihn vorher entnehmen zu müssen. Zur Resuspendierung wird der installierte Rührer verwendet. Das Waschverhältnis, also das Verhältnis von Waschlösungsmittel zu Feststoff kann von 1 : 100 bis zu 100 : 1 variiert werden. Es wird ein wirtschaftliches Optimum erzielt, wenn mit dem eingesetzten Waschlösungsmittel noch eine messbare Abreicherung der Nebenkomponenten im Polymer erreicht wird.

Nach der Resuspendierung, die im Zeitraum 1 min bis mehrere Stunden durchgeführt werden kann, lässt man den Feststoff absetzen und mit einem Druck von beispielsweise 1 bis 10 bar filtrieren. Die Temperaturen der Lösungsmittel befinden sich zwischen Umgebungstemperatur und Siedetemperatur des eingesetzten Lösungsmittels unter dem verwendeten Druck, bevorzugt annähernd bei Siedetemperatur.

Anschließend kann der Filterkuchen durch Luft oder ein inertes Gas oder Dampf in der Druckfilternutsche getrocknet werden. Alternativ kann der Feststoff auch in jeder, dem Fachmann bekannten Trocknungsvorrichtung getrocknet werden. Beispielhaft seien hier Konvektions- (z. B. Schaufeltrockner) und Kontakttrockner (z. B. Drallrohrtrockner) genannt.

Das erfindungsgemäße Verfahren kann in vorteilhafter Weise mit einem oder mehreren weiteren Verfahrensschritten kombiniert werden, die im Folgenden erläutert sind:
a) Entfernung des Reaktionslösemittels aus dem Reaktorgemisch in einem dem Reaktor nachgeschalteten Extruder unter Vakuum und anschließende Abkühlung und Zerkleinerung des Extrudats in Wasser. Hierbei werden mindestens 2 %, mindestens 5 %, mindestens 10%, mindestens 20 %, mindestens 30 %, mindestens 40 %, mindestens 50 % oder mindestens 60 % des Reaktionslösemittels entfernt. Üblicherweise arbeitet man bei einer Massetemperatur von 250 bis 400 °C, bevorzugt von 300 bis 390 °C, und bei einem Druck von 0,1 bis 950 mbar, bevorzugt von 50 bis 500 mbar. Wegen des hohen Siedepunkts ist hier nur eine partielle Entfernung des Reaktionslösemittels sinnvoll. Die Teilentfernung des Reaktionslösemittels mittels Extruder hat aber den Vorteil, dass beim späteren Waschvorgang insgesamt weniger an Waschlösemittel benötigt wird. Auch der sich zunächst anschließende Wasch-/Mahlprozess gestaltet sich einfacher, weil eine verringerte Menge an Reaktionsgemisch eingesetzt wird und weil dieses bereits in vorzerkleinerter Form, etwa als Granulat, vorliegt.
b) Ausfahren des Reaktorinhalts durch eine Düse mit Hilfe eines Extruders oder einer Zahnradpumpe und Abkühlung und Zerkleinerung des erhaltenen Strangs in Wasser oder einem geeigneten anderen Lösemittel, z. B. einem Alkohol wie etwa Ethanol. Auch hier gestaltet sich der anschließende Wasch-/Mahlprozess einfacher, weil das Reaktionsgemisch bereits in vorzerkleinerter Form, etwa als Granulat, vorliegt.
c) Entfernung von anorganischen Salzen aus dem flüssigen Reaktionsgemisch durch Filtration oder Zentrifugieren. Dies kann entweder durch Abtrennung der Salze durch Filtration oder Zentrifugieren des Bodenablaufs aus dem Reaktor oder durch kontinuierliche Abtrennung der Salze aus einem Kreislaufstrom um den Reaktor während oder nach der Polykondensation geschehen.
   Bei den Salzen handelt es sich hier sowohl um die bei der Reaktion entstandenen Halogenide, beispielsweise Natrium- und Kaliumfluorid, als auch um den gegebenenfalls eingesetzten Überschuss an Base, beispielsweise Natriumcarbonat. Die Temperatur liegt bevorzugt oberhalb der Erstarrungstemperatur des Polymers, aber unterhalb der Siedetemperatur des Reaktionslösemittels beim herrschenden Druck. Bei der Filtration des Bodenablaufs ist auf eine dem Fachmann bekannte Art und Weise ein Optimum zu finden zwischen der niedrigen Viskosität bei hohen Temperaturen und dem einfacheren Aufbau von Filtern für Fest-Flüssig-Trennaufgaben bei niedrigen Temperaturen.
   Auf diese Art und Weise wird die mehrstufige und damit aufwendige Wäsche des Reaktionsgemisches mit Wasser zur Entfernung der Salze entweder vollständig vermieden oder zumindest aufgrund der bereits reduzierten Salzfracht deutlich vereinfacht.
d) Versprühen des Reaktorinhalts zur Erzeugung von Partikeln oder Prillen. Hier wird partikuläres Reaktionsgemisch durch Versprühen des flüssigen Reaktionsgemisches durch eine Düse in einen gekühlten Behälter hergestellt. Dabei entstehen Partikel, die durch die Wahl der Verfahrensparameter in Größe und Form beeinflussbar sind. Somit wird dem Mahl-/Waschprozess ein bereits partikuläres Material zugeführt, das vorteilhaft bereits eine große Oberfläche besitzt.
e) Sprühtrocknung des im Reaktor erhaltenen Gemisches zur Erzeugung von Partikeln bei gleichzeitiger, zumindest teilweiser Entfernung des Reaktionslösemittels und eventuell vorhandener weiterer flüchtiger Bestandteile durch Verdampfen. Hierbei wird die Reaktionsmischung bei einer erhöhten Temperatur durch eine geeignete Düse gepresst. Dabei entstehen Partikel, die durch die Wahl der Verfahrensparameter in Größe und Form beeinflussbar sind und so an die weitere Verarbeitung angepasst werden können. Auch hier wird dem Mahl-/Waschprozess ein bereits partikuläres Material zugeführt, das vorteilhaft bereits eine große Oberfläche besitzt.
f) Verfestigung des Reaktorinhalts unter Verwendung eines gekühlten, bewegten Metallbands. Hier wird das Reaktionsgemisch nach dem Ausfahren aus dem Reaktor auf einem gekühlten, bewegten Metallband (beispielsweise Stahlband) in Form von Pastillen, Schuppen, Strängen oder Filmen verfestigt. Das Band rotiert um zwei Walzen und wird von unten durch ein geeignetes Kühlmedium gekühlt. Dabei können verschiedene Temperaturzonen realisiert werden. Gegebenenfalls kann in einer ersten Kühlzone eine Temperatur von nur leicht unterhalb der Reaktortemperatur eingestellt werden, wobei darauf über mehrere Temperaturstufen auf 20 bis 120 °C und bevorzugt auf 40 bis 100 °C weiter abgekühlt wird. Der Prozess läuft kontinuierlich ab. Prinzipiell kann die aus dem Reaktor austretende Schmelze in Form von Filmen, Strängen, Schuppen oder Pastillen mit Hilfe von Verteilvorrichtungen auf das Band aufgebracht werden. Hierbei wird das Material vorteilhaft bereits weitestgehend definiert vorgeformt und kann als staubfreies Material dem Mahl-/Waschprozess zugeführt werden.
g) Direkter Eintrag des flüssigen Reaktorinhalts in ein Wasserbad zum Verfestigen. Hierbei wird die Schmelze in Wasser dosiert, das im Allgemeinen eine Temperatur im Bereich von 20 bis 100°C aufweist. Durch das Abschrecken entstehen im verfestigten Reaktionsgemisch innere Spannungen, die vorteilhaft eine leichtere Vermahlung im Mahl-/Waschprozess bedingen.
h) Entfernen der Salze aus dem flüssigen Reaktionsgemisch durch flüssig-flüssig-Extraktion. Ein geeignetes Verfahren ist in der EP-A-0 292 211 beschrieben, auf die hier ausdrücklich Bezug genommen wird.

In besonders vorteilhafter Weise wird einer der Schritte a), d) und e) mit einem der Schritte c) und h) kombiniert, sodass zunächst eine Abtrennung der Salze erfolgt. Insbesondere wird hierdurch beim Versprühen gemäß d) oder e) einer Verstopfung der Düse entgegengewirkt.

Durch die Verwendung eines Apparates für einen kombinierten Brecher-/Waschprozess, Mahl-/Waschprozess oder Brecher-/Mahl-/Waschprozess, der der Druckfilternutsche vorgeschaltet ist, wird der Reaktoraustrag vorteilhaft in einem Lösemittel vermahlen; dadurch wird das Risiko einer Staubexplosion ausgeschlossen und das Volumen des Waschgutes für die angeschlossene Wäsche in der Druckfilternutsche deutlich reduziert. Dadurch verringert sich der Aufwand an benötigtem Equipment deutlich.

Durch Verwendung der Druckfilternutsche können alle Wasch- und prinzipiell auch die Trocknungsschritte in einem Gefäß durchgeführt werden. Die Möglichkeit des Waschens mit den verschiedenen Lösemitteln unter erhöhter Temperatur und erhöhtem Druck garantiert reduzierte Waschzeiten und/oder eine bessere Waschwirkung.

Das gewaschene und getrocknete Produkt liegt im Allgemeinen als mikroporöse Partikel vor. Es kann in dieser Form direkt verwendet werden, z. B. als Beschichtungsmaterial, es kann aber auch granuliert und hierbei, falls gewünscht, durch Zusatz weiterer Stoffe, wie Füllstoffe, Pigmente, Stabilisatoren, andere Polymere, Verarbeitungshilfsmittel und dergleichen, zu Compounds verarbeitet werden. Geeignete Compounds, ihre Herstellung und Verwendung sind dem Fachmann bekannt.

## Patentansprüche

1. Verfahren zur Herstellung eines Polyarylenetherketons,
**dadurch gekennzeichnet,**
**dass** es folgende Verfahrensschritte enthält:
a) Umsetzung einer aromatischen Dihalogenverbindung mit einem Bisphenol und/oder eines Halogenphenols in Gegenwart von Alkali- und/oder Erdalkalicarbonat oder -hydrogencarbonat in einem hochsiedenden aprotischen Lösemittel zu einem Polyarylenetherketon,
b) Nasszerkleinerung und gleichzeitige Vorextraktion des erstarrten Reaktionsgemisches,
c) Extrahieren und Filtrieren des nasszerkleinerten Produkts in einer Druckfilternutsche und
d) Trocknen des extrahierten Produkts.

2. Verfahren gemäß Anspruch 1,
**dadurch gekennzeichnet,**
**dass** das Polyarylenetherketon ein PEEK, ein PEK, ein PEKK oder ein PEEKK ist.

3. Verfahren gemäß einem der vorhergehenden Ansprüche,
**dadurch gekennzeichnet,**
**dass** die Nasszerkleinerung in einem Brecher, in einer Mühle oder mittels einer Dispergiereinrichtung durchgeführt wird.

4. Verfahren gemäß einem der vorhergehenden Ansprüche,
**dadurch gekennzeichnet,**
**dass** in der Druckfilternutsche mehrmals extrahiert wird, wobei das nasszerkleinerte Produkt jeweils resuspendiert wird.

## Claims

1. Process for preparing a polyarylene ether ketone,
**characterized in that**
it comprises the following process steps:
a) reaction of an aromatic dihalogen compound with a bisphenol and/or a halophenol in the presence of alkali metal and/or alkaline earth metal carbonate or hydrogencarbonate in a high-boiling aprotic solvent to give a polyarylene ether ketone,
b) wet comminution and simultaneous preextraction of the solidified reaction mixture,
c) extraction and filtration of the wet-comminuted product in a pressure suction filter and
d) drying of the extracted product.

2. Process according to Claim 1,
**characterized in that**
the polyarylene ether ketone is a PEEK, a PEK, a PEKK or a PEEKK.

3. Process according to either of the preceding claims,
**characterized in that**
the wet comminution is carried out in a crusher, in a mill or by means of a dispersing unit.

4. Process according to one of the preceding claims,
**characterized in that**
extraction is effected repeatedly in the pressure suction filter to resuspend the wet-comminuted product each time.

## Revendications

1. Procédé de fabrication d'une polyarylène-éther-cétone,
**caractérisé en ce qu'il** contient les étapes de procédé suivantes :
a) on fait réagir un composé aromatique dihalogéné avec un bisphénol et/ou un halogénophénol en présence d'un carbonate ou d'un hydrogénocarbonate de métal alcalin et/ou de métal alcalino-terreux, dans un solvant aprotique à point d'ébullition élevé, de manière à obtenir une polyarylène-éther-cétone,
b) on effectue un broyage à l'état humide et une extraction préliminaire simultanée du mélange réactionnel solidifié,
c) on procède à l'extraction et à la filtration du produit broyé à l'état humide dans un entonnoir de filtration sous pression, et
d) on sèche le produit extrait.

2. Procédé selon la revendication 1,
**caractérisé en ce que**
la polyarylène-éther-cétone est une PEEK, une PEK, une PEKK ou une PEEKK.

3. Procédé selon l'une quelconque des revendications précédentes,
**caractérisé en ce que**
le broyage à l'état humide est effectué dans une broyeuse, dans un moulin broyeur ou à l'aide d'un dispositif favorisant la dispersion.

4. Procédé selon l'une quelconque des revendications précédentes,
**caractérisé en ce que**
on réalise à plusieurs reprises l'étape d'extraction dans l'entonnoir de filtration sous pression, le produit broyé à l'état humide étant, chaque fois, remis en suspension.
